# EUROPÄISCHE PATENTSCHRIFT

(11) **EP 1 958 771 B1**
(45) Veröffentlichungstag und Bekanntmachung des Hinweises auf die Patenterteilung: **06.07.2011**
(21) Anmeldenummer: 08003035.6
(22) Anmeldetag: 19.02.2008
(51) Int. Cl.: B41F 13/22, B41F 7/37, B41F 31/00, F28D 15/00

(54) **Temperiervorrichtung für eine Druckmaschine**
Tempering device for a printing press
Dispositif de régulation thermique d'une presse d'impression

(30) Priorität: 19.02.2007 DE 102007008172
(43) Veröffentlichungstag der Anmeldung: 20.08.2008
(73) Patentinhaber: technotrans AG, 48336 Sassenberg (DE)
(72) Erfinder: Harig, Andreas, 32832 Augustdorf (DE)
(74) Vertreter: Müller-Boré & Partner Patentanwälte

(56) Entgegenhaltungen:
- EP-A- 1 533 116
- EP-A- 1 679 186
- DE-A1- 2 757 946
- US-A- 4 406 138
- US-A- 5 535 600

## Beschreibung

Die vorliegende Erfindung betrifft Druckmaschine mit einer Temperiervorrichtung gemäß dem Oberbegriff des Anspruchs 1.

Temperiersysteme für Druckmaschinen sind in verschiedenen Ausführungsformen bekannt. Sie dienen insbesondere zur Kühlung eines Betriebsmittels im Druckprozeß, wie beispielsweise eines Feuchtmittels, das beim OffsetDruck auf die Druckwalzen aufgebracht wird. Um zu verhindern, dass flüchtige Bestandteile des Feuchtmittels verdunsten, muß zur Erreichung eines guten Druckergebnisses das Feuchtmittel auf einer konstant niedrigen Temperatur gehalten werden. Im Sinne der vorliegenden Anmeldung kann es sich bei dem Betriebsmittel jedoch auch um ein anderes Prozeßmittel der Druckmaschine handeln, oder auch um Kühlwasser zur Temperierung der Druckwalzen oder anderer wesentlicher Bestandteile der Druckmaschine, das in einem Kühlwasserkreislauf geführt wird.

Zur Temperierung des Betriebsmittels umfaßt die Temperiervorrichtung einen Kältemittelkreis, in welchem ein Kältemittel strömt, das durch ein Kälteaggregat gekühlt wird. Der Kältemittelkreis ist mit dem Betriebsmittelkreis durch Wärmetauschermittel gekoppelt, die einen Wärmeaustausch zwischen den beiden Kreisläufen erlauben. Eine relativ einfach konstruierte Temperiervorrichtung kann zu diesem Zweck einen einzigen Wärmetauscher umfassen, dessen Primärseite in den Kältemittelkreis und dessen Sekundärseite in den Betriebsmittelkreis eingeschaltet ist. Aus regelungstechnischen Gründen sind jedoch komplexere Anordnungen üblich, die mehrere Wärmetauscher umfassen, wie es beispielsweise in der europäischen Patentanmeldung 04 027 325 der Anmelderin gezeigt ist. Dort ist ein erster Wärmetauscher vorgesehen, der einerseits vom Kältemittel und andererseits von dem Kühlmittel eines Freikühlerkreises durchströmt wird, sowie ein Dreimedien-Wärmetauscher, der sowohl vom Kältemittel als auch vom Betriebsmittel durchströmt wird. Durch den zusätzlichen Freikühlerkreislauf ergeben sich Vorteile im Energieverbrauch.

Gegenüber der unmittelbaren thermischen Kopplung zwischen dem Kältemittelkreis und dem Betriebsmittelkreis ist es von Vorteil, den Wärmeaustausch über ein zusätzliches Mittel vorzunehmen, nämlich ein Temperiermittel, das als Energiespeicher und damit als Puffer dient, über welchen die Energie zwischen den beiden Kreisläufen übertragen wird. Die Vorrichtung muß also in diesem Fall mit einem zusätzlichen Pufferbehälter für das Temperiermittel ausgestattet werden. Der Platzbedarf der gesamten Vorrichtung wird hierdurch jedoch vergrößert, so dass die Unterbringung in einem gemeinsamen Schrankgehäuse problematisch ist. Außerdem wird der Montageaufwand erhöht. Darüber hinaus ist es erwünscht, einen solchen Puffer für möglichst viele Kreisläufe der Anlage zur Verfügung zu stellen, um eine hohe Regelgenauigkeit zu schaffen und die Fluidmengen zu reduzieren. Dies kann mit den bekannten Vorrichtungen nicht ohne weiteres erreicht werden.

US-A-5 535 600 offenbart ein Kühlsystem für Getränkespender mit einem Eisbad-Tank zum Speichern einer Flüssigkeit, einem ersten Kühlkreislauf zum Kühlen der Flüssigkeit im Eisbad-Tank, einem Konzentrat-Speicherbereich, und einem zweiten Kühlkreislauf zum Kühlen des Konzentrat-Speicherbereichs, wobei der zweite Kühlkreislauf mit dem Eisbad-Tank verbunden ist.

Aufgabe der vorliegenden Erfindung ist es daher, eine Druckmaschine mit einer Temperiervorrichtung der vorstehend genannten Art zu schaffen, bei welcher der Wärmeaustausch zwischen dem Kältemittelkreis und zumindest einem Betriebsmittelkreis gepuffert und mit relativ hoher Regelgenauigkeit erfolgt, gleichzeitig jedoch der Platzbedarf der Vorrichtung und der Aufwand bei deren Montage und Betrieb relativ gering bleibt.

Diese Aufgabe wird erfindungsgemäß durch eine Druckmaschine mit einer Temperiervorrichtung mit den Merkmalen des Anspruchs 1 gelöst.

Die Wärmetauschers der erfindungsgemäßen Temperiervorrichtung sind in einen gemeinsamen Speichertank integriert, der ein Temperiermittel enthält, das beide Wärmetauscher durchströmt. Durch die Integration in einen einzigen Behälter ergibt sich ein verringerter Platzbedarf gegenüber Anlagen, bei denen ein zusätzlicher Speicherbehälter vorgesehen ist, der ein Puffermedium beinhaltet. Der Montageaufwand wird reduziert, und die gesamte Anlage kann problemlos in einem einzigen Geräteschrank untergebracht werden. Ein weiterer Vorteil besteht darin, dass auf eine Isolierung der Wärmetauscher verzichtet werden kann und deren Abwärme nutzbar ist. Ohne wesentlich vergrößerten Platzbedarf kann der Speichertank ein relativ großes Temperiermittel-Volumen beinhalten, so dass eine ausreichende Energiespeicherung und Pufferwirkung und damit eine hohe Regelgenauigkeit erreicht wird. Ein Anschluß mehrerer Kreisläufe an den Speichertank ist problemlos möglich.

Gemäß der Erfindung ist an einen Temperiermittel-Auslaß des ersten Wärmetauschers ein Temperiermittel-Rücklauf zur Rückführung des Temperiermittels in den Speichertank angeschlossen, welcher in einen Temperiermittel-Einlass des zweiten Wärmetauschers mündet.

In einer bevorzugten Ausführungsform verzweigt sich der Temperiermittel-Rücklauf in zwei Rücklauf-Zweigleitungen, von denen eine erste Zweigleitung unmittelbar in den Speichertank mündet und die zweite Zweigleitung in den Temperiermittel-Einlaß des zweiten Wärmetauschers mündet, wobei der Temperiermittel-Auslaß des zweiten Wärmetauschers wiederum in den Speichertank mündet.

Vorzugsweise ist an der Zweigstelle des Temperiermittel-Rücklaufs ein 3/2-Wege-Stellventil angeordnet, an dessen Abgängen die beiden Rücklauf-Zweigleitungen angeschlossen sind.

Dieses 3/2-Wege-Stellventil umfaßt vorzugsweise eine Stelleinrichtung zur stufenlosen Regelung der Stellung des Stellventils zwischen zwei Öffnungsstellungen. Diese Stelleinrichtung ist in Abhängigkeit von einem Meßsignal eines Temperaturfühlers steuerbar, der zur Messung der Temperatur des durch den zweiten Wärmetauscher temperierten Prozeßmittels angeordnet ist.

Bevorzugt umfaßt die Temperiervorrichtung einen weiteren Temperierkreis, der vom Temperiermittel durchströmt wird und dessen Einlaß und Auslaß unmittelbar in den Speichertank münden.

Im folgenden wird ein bevorzugtes Ausführungsbeispiel der Erfindung anhand der beigefügten Zeichnung näher erläutert.

Die einzige Figur zeigt ein bevorzugtes Ausführungsbeispiel einer Ausführungsform der erfindungsgemäßen Temperiervorrichtung.

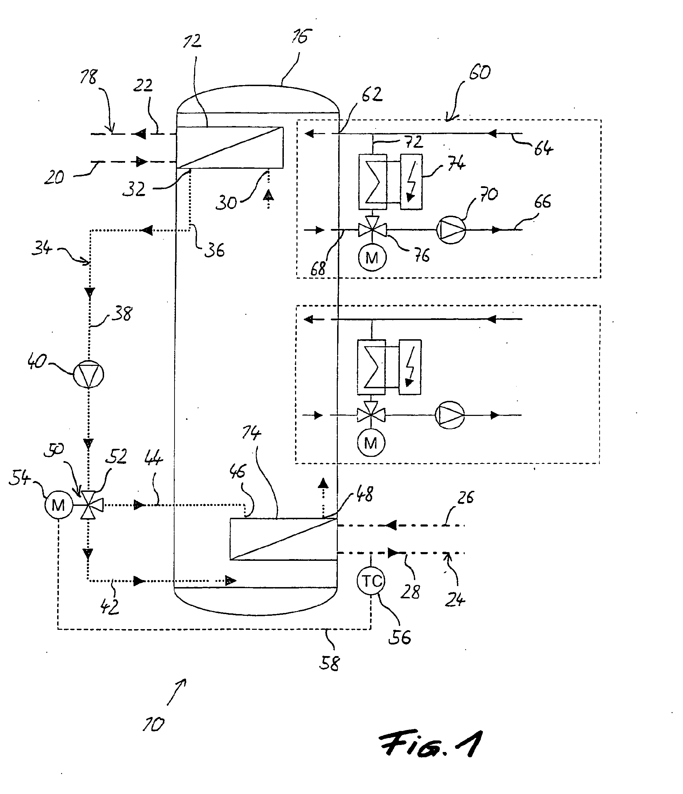

Die in Fig. 1 gezeigte Temperiervorrichtung 10 dient zur Temperierung eines Betriebsmittels einer nicht näher dargestellten Druckmaschine. Das Betriebsmittel kann ein Prozeßmittel im Druckprozeß sein, wie insbesondere ein Feuchtmittel, das im Offsetdruck auf die Druckwalzen aufgetragen wird. Im Sinne der vorliegenden Anmeldung kann es sich bei dem Betriebsmittel jedoch auch um ein Kälte- oder Kühlmittel wie etwa Kühlwasser zur Kühlung der Druckzylinder handeln. Für den Betrieb der Druckmaschine ist es von Bedeutung, dass das Betriebsmittel auf einer möglichst konstanten Temperatur gehalten wird. Dies wird durch den Betrieb der erfindungsgemäßen Temperiervorrichtung 10 erreicht, wie nachfolgend noch näher beschrieben werden soll.

Die Temperiervorrichtung 10 umfaßt einen ersten Wärmetauscher 12, einen zweiten Wärmetauscher 14 und einen Speichertank 16, in welchen die beiden Wärmetauscher 12,14 integriert sind. Der erste Wärmetauscher 12, der im in Fig. 1 oberen Bereich des Speichertanks 16 angeordnet ist, ist in einen Kältemittelkreis 18 eingeschaltet, durch welchen ein Kältemittel strömt. In der Figur ist lediglich ein Kältemittel-Vorlauf 20 des Kältemittelkreises 18 dargestellt, der in einen primärseitigen Kältemittel-Einlaß des ersten Wärmetauschers 12 mündet, sowie ein Kältemittel-Rücklauf 22, der von einem entsprechenden Auslaß des ersten Wärmetauschers 12 ausgeht. Weitere Teile des Kältemittelkreises 18 sind der Übersichtlichkeit halber nicht dargestellt. Der Kältemittelkreis 18 kann insbesondere ein Kühlaggregat zur Kühlung des Kältemittels umfassen. Es wird an dieser Stelle angemerkt, dass es für die Funktion der Erfindung nicht erforderlich ist, dass das Kältemittel in einem geschlossenen Kreislauf geführt wird, das heißt, dass der Kältemittelkreis 18 geschlossen ist.

Der zweite Wärmetauscher 14, der im unteren Bereich des Speichertanks 16 angeordnet ist, ist in einen Betriebsmittelkreis 24 eingeschaltet, von welchem ein Betriebsmittel-Vorlauf 26 in einen sekundärseitigen Betriebsmittel-Einlaß des zweiten Wärmetauschers 14 mündet, und ein Betriebsmittel-Rücklauf 28 an einen entsprechenden Betriebsmittel-Auslaß des zweiten Wärmetauschers 14 angeschlossen ist. Auch hier ist es unerheblich, ob der Betriebsmittelkreis 24 tatsächlich einen geschlossenen Kreislauf darstellt, in welchem das Betriebsmittel zirkuliert und gegebenenfalls wiederaufbereitet wird.

Während es sich bei dem ersten Wärmetauscher um einen Verdampfer-Wärmetauscher 12 handelt, ist der zweite Wärmetauscher 14 ein Wasser/Wasser-Wärmetauscher. Jedoch ist die Ausgestaltung darauf nicht beschränkt, sondern es kann sowohl ein zusätzlicher Verdampfer als auch ein Kondensator-Wärmetauscher vorgesehen werden.

Der Speichertank 16 enthält ein Temperiermittel wie beispielsweise Wasser, welches dazu dient, den Wärmeaustausch zwischen den beiden Wärmetauschern 12 und 14 herzustellen. Hierzu kann das Temperiermittel über einen Temperiermittel-Einlaß 30 an der Sekundärseite des ersten Wärmetauschers 12 innerhalb des Speichertanks 16 einströmen. An den Temperiermittel-Auslaß 32 des ersten Wärmetauschers 12 ist ein Temperiermittel-Rücklauf 34 angeschlossen, der einen ersten Abschnitt 36 aufweist, der innerhalb des Speichertanks 16 verläuft, sowie einen sich daran anschließenden Abschnitt 38, der außerhalb des Speichertanks 16 verläuft. Innerhalb des zweiten Abschnitts 38 des Temperiermittel-Rücklaufs 34 ist eine Zirkulationspumpe 40 angeordnet, die das Temperiermittel durch den Temperiermittel-Rücklauf 34 fördert.

Der Temperiermittel-Rücklauf 34 verzweigt sich in zwei Rücklauf-Zweigleitungen 42,44, von denen eine erste Zweigleitung 42 unmittelbar in den unteren Bereich des Speichertanks 16 mündet. Die zweite Zweigleitung 44 erstreckt sich zwar ebenfalls in den Speichertank 16 hinein, mündet jedoch in einen primärseitigen Temperiermittel-Einlaß 46 des zweiten Wärmetauschers 14. Der Temperiermittel-Auslaß 48 des zweiten Wärmetauschers 14 mündet in den Speichertank 16.

Auf diese Weise kann das Temperiermittel durch den Rücklauf 34 entweder direkt in den Speichertank 16 oder in die Primärseite des zweiten Wärmetauschers 14 einströmen. An der Zweigstelle 50 der Temperiermittel-Rücklaufleitung 34, an der die beiden Zweigleitungen 42,44 abzweigen, ist ein 3/2-Wege-Stellventil 52 angeordnet, an dessen Abgänge sich die beiden Zweigleitungen 42,44 anschließen. Das Stellventil 52 ist stufenlos in eine Stellung zwischen zwei Öffnungsstellungen regelbar, so dass Temperiermittel leistungsabhängig durch die Zweigleitung 44 in den zweiten Wärmetauscher 14 oder direkt über die erste Zweigleitung 42 in den Speichertank 16 strömen kann. In einer Zwischenstellung des Stellventils 52 strömt das Temperiermittel anteilig durch die jeweiligen Zweigleitungen 42 und 44.

Zum stufenlosen Regeln ist eine Stelleinrichtung 54 vorgesehen, die beispielsweise elektrisch betrieben wird. Die Stelleinrichtung 54 ist in Abhängigkeit vom Meßsignal eines Temperaturfühlers 56 steuerbar, der an der Rücklaufleitung 28 des Betriebsmittelkreises 24 zur Messung des darin strömenden Betriebsmittels vorgesehen ist. Der Temperaturfühler 56 ist über eine Signalleitung 58 mit der Stelleinrichtung 54 verbunden. Auf diese Weise kann der Stellvorgang in Abhängigkeit von der Temperatur des Betriebsmittels vorgenommen werden, das die Sekundärseite des zweiten Wärmetauschers 14 verläßt.

Durch die zuvor beschriebene Anordnung läßt sich somit Wärme zwischen den beiden Wärmetauschern 12 und 14 übertragen. Das Temperiermittel innerhalb des Speichertanks 16 dient als Puffer zur Speicherung der Wärmeenergie. Es kann über den Temperiermittel-Einlaß 30 in die Sekundärseite des ersten Wärmetauschers 12 einströmen und über den Rücklauf 34 wahlweise direkt in die Primärseite des zweiten Wärmetauschers 14 gefördert werden oder aber in einer alternativen Stellung des 3/2-Wege-Stellventils 52 zurück in den Speichertank 16 gepumpt werden, in Abhängigkeit von der Temperatur des Betriebsmittels, das die Sekundärseite des zweiten Wärmetauschers 14 verläßt. Auf diese Weise ist eine effektive Temperaturregelung im Betriebsmittelkreis 24 möglich.

In der vorliegenden Temperiervorrichtung 10 sind der Kältemittelkreis 18 und der Betriebsmittelkreis 24 als Primär- und Sekundärkreis nicht unmittelbar zum Wärmeaustausch miteinander gekoppelt, sondern lediglich über das Temperiermittel im Speichertank 16. Dies führt zu Vorteilen bei der Temperaturregelung. Zudem wird durch die vollständige Integration der Wärmetauscher 12,14 in den Speichertank 16 eine kompakte Einheit geschaffen, die sich gut in einem Geräteschrank unterbringen läßt. Auf eine Isolierung der Wärmetauscher 12,14 kann verzichtet werden. Stattdessen wird die Abwärme der Wärmetauscher 12,14 genutzt.

Die hier vorliegende Ausführungsform der erfindungsgemäßen Temperiervorrichtung 10 umfaßt ferner weitere Temperierkreise, die identisch aufgebaut sind und von denen in der Figur lediglich zwei Temperierkreise 60 dargestellt sind. Ein Einlaßende 62 eines Vorlaufs 64 des Temperierkreises 60 mündet unmittelbar in den Speichertank 16, so wie auch der Rücklauf 66 des Temperierkreises 16 direkt von einem Auslaß 68 am Speichertank ausgeht.

In dem Temperierkreis 60 wird somit Temperiermittel geführt, das durch den Vorlauf 64 unmittelbar in den Speichertank 16 einströmen kann und diesen über den Rücklauf 66 wieder in Richtung der Druckmaschine verläßt. Zum Fördern des Temperiermittels ist in den Rücklauf 66 eine Zirkulationspumpe 70 eingesetzt. Über eine Bypassleitung 72, die außerhalb des Speichertanks 16 den Vorlauf 64 mit dem Rücklauf 66 verbindet, kann Temperiermittel unter Umgehung des Speichertanks 16 unmittelbar vom Vorlauf 64 in den Rücklauf 66 eingeleitet werden. Durch eine Heizeinheit 74 innerhalb der Bypassleitung 72 wird dieser abgezweigte Temperiermittel-Anteil aufgeheizt. Der Anteil des Temperiermittels, der durch die Bypassleitung 72 abgezweigt wird, wird durch ein Wegeventil 76 bestimmt, das in der Rücklaufleitung 66 angeordnet ist. Ein vom Auslaß 68 ausgehender Abschnitt der Rücklaufleitung 66 mündet in einen ersten Einlaß des Wegeventils 76, die Bypassleitung 72 mündet in einen zweiten Einlaß, während der Auslaß des Wegeventils 76 in einen stromabwärts des Ventils 76 gelegenen Abschnitt des Rücklaufs mündet. Durch eine entsprechende Ventilsteuerung läßt sich somit bestimmen, ob Temperiermittel aus der Vorlaufleitung 64 über die Bypassleitung 72 in die Rücklaufleitung 66 gefördert wird oder ob das Temperiermittel zunächst in den Speichertank 16 strömt und erst anschließend in den Rücklauf 66 gelangen kann. Der Temperierkreis 60 ist auf diese Weise hydraulisch mit dem Speichertank 16 gekoppelt und kann zur Temperierung einer weiteren Einrichtung der Druckmaschine dienen.

## Patentansprüche

1. Druckmaschine mit einer Temperiervorrichtung (10), mit einem Kältemittelkreis (18), in welchem ein Kältemittel strömt und in den ein erster Wärmetauscher (12) eingeschaltet ist, mindestens einem Betriebsmittelkreis (24), in welchem ein Prozessmittel der Druckmaschine oder ein Kühlmittel strömt und in den ein zweiter Wärmetauscher (14) eingeschaltet ist,und Wärmetauschermitteln zum Wärmeaustausch zwischen dem ersten Wärmetauscher (12) und dem zweiten Wärmetauscher (14), wobei die Wärmetauscher (12,14) in einen gemeinsamen Speichertank (16) integriert sind, **dadurch gekennzeichnet, dass** der Speichertank (16) ein Temperiermittel enthält, das beide Wärmetauscher (12,14) durchströmt, und dass eine Temperiermittel-Rücklaufleitung (34), welche an einem Temperiermittel-Auslass (32) des ersten Wärmetauschers (12) angeschlossen ist, in einen Temperiermittel-Einlass (46) des zweiten Wärmetauschers mündet.

2. Druckmaschine nach Anspruch 1, **dadurch gekennzeichnet, dass** die Temperiermittel-Rücklaufleitung (34) sich in zwei Rücklauf-Zweigleitungen (42,44) verzweigt, von denen eine erste Rücklauf-Zweigleitung (42) unmittelbar in den Speichertank (16) mündet und eine zweite Rücklauf-Zweigleitung (44) in den Temperiermittel-Einlass (46) des zweiten Wärmetauschers (14) mündet, und dass der Temperiermittel-Auslass (48) des zweiten Wärmetauschers (14) in den Speichertank (16) mündet.

3. Druckmaschine nach Anspruch 2, **dadurch gekennzeichnet, dass** an der Zweigstelle (50) der Temperiermittel-Rücklaufleitung (34) ein 3/2-Wege-Stellventil (52) angeordnet ist, an dessen Abgänge die beiden Rücklauf-Zweigleitungen (42,44) angeschlossen sind.

4. Druckmaschine nach Anspruch 3, **dadurch gekennzeichnet, dass** das 3/2-Wege-Stellventil (52) eine Stelleinrichtung (54) zur stufenlosen Regelung der Stellung des Stellventils (52) zwischen zwei Öffnungsstellungen umfasst, welche Stelleinrichtung (54) in Abhängigkeit von einem Messsignal eines Temperaturfühlers (56) steuerbar ist, der zur Messung der Temperatur des durch den zweiten Wärmetauscher (14) temperierten Betriebsmittels angeordnet ist.

5. Druckmaschine nach einem der vorhergehenden Ansprüche, **gekennzeichnet durch** zumindest einen weiteren Temperierkreis (60), der vom Temperiermittel durchströmt wird und dessen Einlass (62) und Auslass (68) unmittelbar in den Speichertank (16) münden.

## Claims

1. Printing machine having a tempering device (10) comprising: a coolant circuit (18) having a coolant flowing therein and a first heat exchanger (12) connected, at least one processing medium circuit (24) having a processing medium of the printing device or a coolant flowing therein and a second heat exchanger (14) connected, and heat exchange media for exchanging heat between the first heat exchanger (12) and the second heat exchanger (14), wherein the heat exchangers (12, 14) are integrated with a common storage tank (16), **characterised in that** the storage tank (16) contains a tempering medium that flows through both heat exchangers (12, 14) and that the tempering medium return pipe (34) being connected to a tempering medium outlet (32) of the first heat exchanger (12) leads to a tempering medium inlet (46) of the second heat exchanger.

2. Printing machine according to claim 1, **characterised in that** the tempering means return pipe (34) branches into two return branch pipes (42, 44), of which a first return branch pipe (42) leads straight into the storage tank (16) and a second return branch pipe (44) leads into the tempering medium inlet (46) of the second heat exchanger (14) and that the tempering medium outlet (48) of the second heat exchanger (14) leads to the storage tank (16).

3. Printing machine according to claim 2, **characterised in that** a 3/2-way adjustment valve (52) is arranged at the branching point (50) of the tempering medium return pipe (34) having both return branch pipes (42, 44) connected to its outlets.

4. Printing machine according to claim 3, **characterised in that** the 3/2-way adjustment valve (52) comprises adjustment means (54) for continuous control of the position of the adjustment valve (52) between two open positions, wherein the adjustment means (54) is controllable in dependence of a measuring signal of a temperature sensor (56) being arranged for measuring the temperature of the processing medium tempered by the second heat exchanger (14).

5. Printing machine according to any of the preceding claims, **characterised by** at least one other tempering circuit (60) having the tempering medium flowing therein and having its inlet (62) and outlet (68) led to the storage tank (16) directly.

## Revendications

1. Presse d'impression équipée d'un dispositif de régulation thermique (10), comprenant un circuit frigorigène (18) dans lequel circule un agent frigorigène et dans lequel est branché un premier échangeur thermique (12), au moins un circuit de moyen de production (24) dans lequel circule un agent de processus de la presse d'impression ou un réfrigérant et dans lequel est branché un second échangeur thermique (14), et des agents d'échangeur thermique destinés à l'échange thermique entre le premier échangeur thermique (12) et le second échangeur thermique (14), les échangeurs thermiques (12, 14) étant intégrés dans un réservoir de stockage commun (16), **caractérisée en ce que** le réservoir de stockage (16) contient un agent de régulation thermique qui circule à travers les deux échangeurs thermiques (12, 14), et **en ce qu'**une conduite de retour d'agent de régulation thermique (34) qui est raccordée à un orifice d'échappement de l'agent de régulation thermique (32) du premier échangeur thermique (12) débouche dans un orifice d'admission de l'agent de régulation thermique (46) du second échangeur thermique.

2. Presse d'impression selon la revendication 1, **caractérisée en ce que** la conduite de retour d'agent de régulation thermique (34) est divisée en deux conduites dérivées de retour (42, 44), dont une première conduite dérivée de retour (42) débouche directement dans le réservoir de stockage (16) et une seconde conduite dérivée de retour (44) débouche dans l'orifice d'admission de l'agent de régulation thermique (46) du second échangeur thermique (14), et **en ce que** l'orifice d'échappement de l'agent de régulation thermique (48) du second échangeur thermique (14) débouche dans le réservoir de stockage (16).

3. Presse d'impression selon la revendication 2, **caractérisée en ce qu'**une vanne de régulation 3/2 voies est placée au point de dérivation (50) de la conduite de retour d'agent de régulation thermique (34), et les deux conduites dérivées de retour (42, 44) sont raccordées aux départs de cette vanne.

4. Presse d'impression selon la revendication 3, **caractérisée en ce que** la vanne de régulation 3/2 voies comprend un dispositif de régulation (54) destiné à la régulation continue de la position de la vanne de régulation (52) entre deux positions d'ouverture, lequel dispositif de régulation (54) peut être commandé en fonction d'un signal de mesure d'un capteur de température (56) qui est placé pour mesurer la température du moyen de production régulé thermiquement par le second échangeur thermique (14).

5. Presse d'impression selon une des revendications précédentes, **caractérisée par** au moins un autre circuit de régulation thermique (60) qui est parcouru par l'agent de régulation thermique et dont l'orifice d'admission (62) et l'orifice d'échappement (68) débouchent directement dans le réservoir de stockage (16).
